# EUROPÄISCHE PATENTSCHRIFT

(11) **EP 0 881 132 B1**
(45) Veröffentlichungstag und Bekanntmachung des Hinweises auf die Patenterteilung: **28.12.2005**
(21) Anmeldenummer: 98106948.7
(22) Anmeldetag: 16.04.1998
(51) Int. Cl.: B60R 21/32, B60R 16/02

(54) **Verfahren und Vorrichtung zur Sitzbelegungserkennung in einem Kraftfahrzeug**
Method and apparatus for seat occupancy recognition in a vehicle
Méthode et système de reconnaissance d'occupation de siège pour un véhicule automobile

(30) Priorität: 27.05.1997 DE 19722085
(43) Veröffentlichungstag der Anmeldung: 02.12.1998
(73) Patentinhaber: Volkswagen Aktiengesellschaft, 38436 Wolfsburg (DE)
(72) Erfinder: Mai, Rudolf, 38442 Wolfsburg (DE); Sinnhuber, Ruprecht, Dipl.-Ing., 38518 Gifhorn (DE); Zander, André, 38820 Halberstadt (DE)

(56) Entgegenhaltungen:
- DE-A- 4 112 579
- DE-A- 4 338 285
- DE-C- 4 433 601
- GB-A- 2 289 332

## Beschreibung

Die Erfindung betrifft ein Verfahren und eine Vorrichtung zur Sitzbelegungserkennung in einem Kraftfahrzeug gemäß dem Oberbegriff der unabhängigen Patentansprüche.

Aus vielerlei Gründen ist, die Kenntnis ob ein Fahrzeugsitz belegt ist und die Art der Belegung von großer Bedeutung. Hat z. B. ein auf dem Fahrzeugsitz befindlicher Kindersitz eine falsche Position, kann die Auslösung eines Airbags für ein darauf sitzendes Kind schlimme Folgen haben. Auch die Kenntnis der Sitzposition einer sich auf dem Fahrzeugsitz befindlichen Person ist von großem Interesse, da für die Wirkung des Airbags von Wichtigkeit ist, dass ein Mindestabstand zwischen Insassen und Airbag zu Beginn der Auslösung sichergestellt ist, damit bei einem Aufprall ausreichend Zeit für die Entfaltung des Airbags vorhanden ist. Auch sollte der Airbag nur ausgelöst werden, wenn der Fahrzeugsitz wirklich belegt ist, da eine Instandsetzung des ausgelösten Airbags sehr kostspielig ist. Des Weiteren kann man Komfortfunktionen in Abhängigkeit der Sitzbelegung einstellen, wie eine Klimaanlage bzw. ein Gebläse entsprechend anders ausgerichtet werden, je nachdem ob der Beifahrersitz belegt ist oder nicht.

In der DE 44 33 601 C1 ist ein Verfahren und eine Vorrichtung zur Aktivierung bzw. Deaktivierung von sicherheitsrelevanten Systemen innerhalb der Fahrgastzelle eines Kraftfahrzeuges beschrieben. Hierbei soll mittels eines auf einen möglichen Kopf- oder Schulterbereich eines Sitzes fokusierten Sensors eine zuverlässige Erkennung der Benutzung des Fahrzeugsitzes durch eine Person und damit eine Unterscheidung von Gepäckstücken oder dergleichen möglich sein. Der Überwachungszeitraum des den Kopf- oder Schulterbereich überwachenden Sensors wird beispielsweise durch die Betätigung der Zündung des Fahrzeuges bei geschlossenen Türen oder beim Start der Fahrt oder nach dem Schließen der Türen gestartet.

In der DE 41 12 579 A1 ist ein Sicherheitssystem zum Schutz eines Fahrzeuginsassen beschrieben, wobei die Position eines Fahrzeugsitzes und die Sitzposition des Fahrzeuginsassens erfasst und bei der Auslösung des Sicherheitssystems berücksichtigt werden. Die eigentliche Sitzbelegungserkennung erfolgt über eine Dateneingabeeinrichtung. Bei Betätigung der Dateneingabeeinrichtung durch den Insassen weiß die Einrichtung, dass der Fahrzeugsitz mit einer Person besetzt ist. Ferner sind weitere Sensoren vorgesehen, die die Position des Fahrzeugsitzes, die Stellung der Rücklehne sowie die Sitzhaltung des Insassen erfassen. Mittels der Daten dieser Sensoren wird bei Feststellung eines Aufpralls das Verhalten des Fahrzeuginsassens simuliert und die Beaufschlagungseinrichtungen werden derart angesteuert, dass der Schaden für den Insassen minimiert wird.

Aus der DE 38 02 159 ist eine Sitzbelegungs-Erkennungseinrichtung für Kraftfahrzeuge mit verstellbaren Sitzen bekannt, bei der der Zustand der Belegung des Fahrzeugsitzes mittels einer eine Schalteinrichtung ansteuernden Vergleichseinrichtung, Weggebern zur Erfassung von Positionen des Fahrzeugsitzes relativ zum Fahrzeug und von Positionen von Sitzteilen zueinander und einem eine Entfernung einer Oberfläche von einem, in Richtung eines Oberflächenbereiches eines bestimmten Sitzteiles messenden, an einem fahrzeugfesten, dem bestimmten Sitzteil gegenüberliegend angeordneten, berührungsfrei arbeitenden Entfernungsmesser ermittelt wird, wobei die Vergleichseinrichtung aus Positionsdaten der Weggeber eine Distanz zwischen dem Oberflächenbereich des Fahrzeugsitzes und dem Entfernungsmesssensor errechnet, die Distanz mit der vom Entfernungsmesssensor vergleicht und bei übereinstimmenden Werten die Schalteinrichtung ansteuert. Der Entfernungsmesssensor ist dabei vorzugsweise als Ultraschall- oder Infrarot-Sensor ausgebildet. Dazu sendet der Entfernungsmesssensor eine Ultraschall- oder Infrarotwelle in Richtung des Fahrzeugsitzes aus und empfängt eine aus dieser Richtung von einer Oberfläche einer auf dem Fahrzeugsitz sitzenden Person oder bei unbelegtem Sitz von der Rücklehne des Sitzes reflektierte Welle, wobei aus den Laufzeiten der Welle auf die Sitzbelegung zurückgeschlossen werden kann.

Aus der US 5,330,226 ist eine Sitzbelegungs-Erkennungseinrichtung bekannt, bei der ein Infrarot-Sensor oberhalb des Fahrzeugsitzes im Dachhimmel angeordnet ist. Der Infrarot-Sensor weist eine Vielzahl von Gesichtsfeldern auf, mittels derer die relative Position eines Fahrzeuginsassen zum Airbag bestimmt wird, so dass der Airbag bei der Auslösung entsprechend angesteuert werden kann, ohne den Insassen zu verletzen.

Aus der DE 41 10 702 ist eine Sitzbelegungs-Erkennungseinrichtung zur Ansteuerung einer Sitzheizung bekannt, bei der ein in der Sitzfläche angeordneter durch Stromfluss aufheizbarer Leiter der Sitzheizung die erste Elektrode eines aus zwei Elektroden bestehenden kapazitiven Sensors für die Sitzbelegung bildet.

Nachteilig an allen bekannten Vorrichtungen ist, dass die Fahrzeuginsassen kontinuierlich Strahlungsquellen ausgesetzt sind. Da die Auswirkungen einer Langzeitaussetzung elektromagnetischer Strahlung bzw. von Ultraschallwellen zum Teil sehr umstritten sind, besteht die Gefahr, dass die Fahrzeuginsassen durch die fortlaufende Abtastung in ihrem Wohlbefinden gestört bzw. möglicherweise sogar geschädigt werden.

Der Erfindung liegt daher das technische Problem zugrunde, ein Verfahren und eine Vonichtung zur Sitzbelegungserkennung in einem Kraftfahrzeug zu schaffen, wobei der Fahrzeuginsasse so wenig wie möglich mit irgendwie gearteter Strahlung belastet und bei Auslösung eines Sicherheitssystems der Schaden für den Fahrzeuginsassen minimiert wird.

Die Lösung des technischen Problems ergibt sich durch die Merkmale der Patentansprüche 1 und 3. Durch die Auslösung der Sitzbelegungs-Erkennungseinrichtung nur in vordefinierten Situationen für ein bestimmtes Zeltintervall wird erreicht, dass die Belastung für die Fahrzeuginsassen durch Strahlung der Sitzbelegungs-Erkennungseinrichtung auf ein vertretbares Quantum beschränkt wird. Weitere vorteilhafte Ausgestaltungen der Erfindung ergeben sich aus den Unteransprüchen.

Da eine Änderung der Sitzbelegung stets ein Aus- oder Zusteigen erfordert, können die meisten relevanten Situationen durch einen. Türzustands- und/-oder Motorzustands-Sensor erfasst werden. Wird das Kraftfahrzeug gestartet, muss ersbmalig geprüft werden, welche Fahrzeugsitze belegt sind. Dazu sind verschiedene Konstellationen möglich. So kann der Fahrer einsteigen und bereits den Motor anlassen, bevor alle Insassen eingestiegen sind, oder der Fahrer wartet mit dem Anlassen des Motors solange, bis alle Insassen eingestiegen sind. Da eine zuverlässige Sitzbelegungserkennung erst nach Abschluss der letzten Handlung vorgenommen werden kann, erfolgt vorzugsweise eine alternative Abfrage.

Eine Insassenpositionserkennung erfolgt nur, falls ein z.B. einen Airbag ansteuernder Sensor ein Signal erzeugt, wobei der Sensor derart ausgebildet ist, dass er eine Kollision bzw. eine bevorstehende Kollision mit einem Hindernis erfasst, bevor eine durch die Kollision ausgelöste negative Verzögerung des Kraftfahrzeuges auf den Innenraum des Kraftfahrzeuges bzw. die Fahrzeuginsassen einwirkt.

Nach einer Ausbildung der Erfindung ist der Sensor zur Erfassung einer bevorstehenden Kollision ein Precrashsensor. Ein Precrashsensor besteht aus einer Mehrzahl von Einzelsensoren, die einen Nahbereich um das Fahrzeug erfassen. Wird in dem Nahbereich um das Fahrzeug ein Objekt bzw. Hindernis ermittelt, erfasst der Sensor laufend den Abstand des Objektes zum Kraftfahrzeug und gegebenenfalls die Relativgeschwindigkeit zwischen Objekt und Kraftfahrzeug und erkennt somit eine bevorstehende Kollision mit diesem Objekt.

Des weiteren erfaßt der Motor- bzw. Türzustands-Sensor, ob ein Fahrzeugsitz belegt ist, wobei die durch den Sensor zur Erfassung einer Kollision bzw. einer bevorstehenden Kollision ausgelösten Sitzbelegungserkennung nur noch die genaue Position des Fahrzeugsitzes und die Sitzposition des Insassen erfasst.

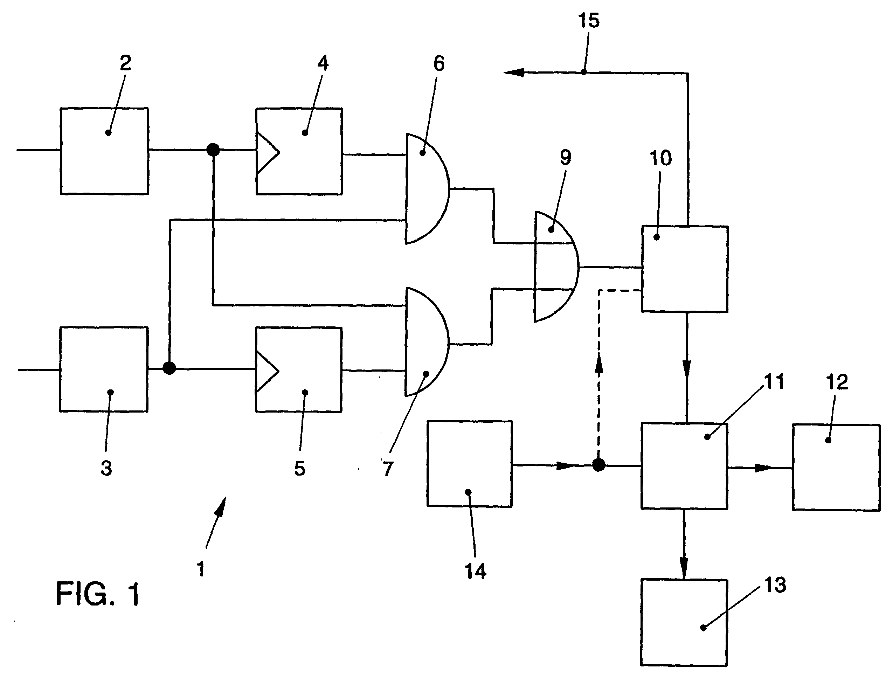

Die Erfindung wird nachfolgend anhand eines bevorzugten Ausführungsbeispieles näher erläutert. Die einzige Figur zeigt ein schematisches Blockschaltbild der Vorrichtung zur Sitzbelegungserkennung in einem Kraftfahrzeug.

Die Vorrichtung 1 zur Sitzbelegungserkennung umfasst einen Türzustands-Sensor 2, einen Motorzustands-Sensor 3, denen jeweils eine Flankenerkennungseinrichtung 4,5 zugeordnet ist. Der Signalausgang eines Sensors 2 bzw. 3 ist mit dem Signalausgang der Flanken-erkennungseinrichtung 5 bzw. 4 des anderen Sensors 3 bzw. 2 auf den Eingang eines Und-Gatters 6 bzw. 7 geschaltet. Die Signalausgänge der Und-Gatter 6,7 sind über ein Oder-Gatter 9 disjunktiv verknüpft, dessen Ausgang auf einen Zähler 10 geschaltet ist. Dieser Zähler 10 ist mit einem Sitzbelegungs-Sensor 11 verbunden, der wiederum in Wirkverbindung zu einem zugeordneten Fahrzeugsitz 12 und einer Sitzheizung 13 steht Weiter umfasst die Vorrichtung 1 einen Precrash-Sensor 14, der entweder mit dem Zähler 10 oder direkt mit dem Sitzbelegungs-Sensor 11 verbunden ist.

So steigt z.B. ein Kraftfahrzeugführer in sein Fahrzeug und wartet bis sein Beifahrer zugestiegen ist und die Fahrzeugtür geschlossen hat. Sind die Türen geschlossen, so liegt am Ausgang des Türstands-Sensors 2 eine logische 1 an. Lässt nun der Kraftfahrzeugführer den Motor an, so ändert sich der logische Zustand am Ausgang des Motorzustands-Sensors 3 von logisch o auf logisch 1. Diese positive Flanke wird von der Flankenerkennungseinrichtung 5 erfasst, die nun ihrerseits am Ausgang von logisch 0 auf logisch 1 wechselt. Damit sind beide Eingänge des Und-Gatters 7 auf logisch 1, und dessen Ausgang schaltet ebenfalls auf logisch 1 und somit auch der Ausgang des Oder-Gatters 9. Die logische 1 des Oder-Gatters 9 enabled den Zähler 10. Der Zähler 10 läuft nun bis zu einem bestimmten Zählerstand, der entweder fest verdrahtet oder frei programmierbar ist. Solange der Zähler 10 läuft, ist der Sitzbelegungs-Sensor 11 aktiviert und detektiert, ob der Fahrzeugsitz 12 belegt ist Erfasst der Sitzbelegungs-Sensor 11 einen Fahrzeuginsassen, so wird die zugehörige Sitzheizung 13 angeschaltet. Der Sitzbelegungs-Sensor 11 kann z.B. als Infrarot-, Ultraschall- oder Kapazitäts-Sensor ausgebildet sein. Erreicht der Zähler 10 seinen eingestellten Zählerstand, so erzeugt dieser ein Reset-Signal 15 für die Flankenerkennungseinrichtungen 4, 5 und wird disabled.

Erfolgt während der Fahrt eine Gefahrensituation, die ein Auslösen des Airbags erforderlich machen könnte, so erzeugt der Precrash-Sensor 14 ein Signal, das entweder den Zähler 10 enabled oder aber direkt den Sitzbelegungs-Sensor 11 aktiviert. Dieser ermittelt dann die genaue Position des Insassen, um den Airbag derart anzusteuern, dass durch dessen Auslösung der Insasse nicht verletzt wird. Die Sitzheizung 13 kann entweder mit Öffnung der zugehörigen Tür, mit Abstellen des Motors oder durch ein negatives Ergebnis bei der nächsten Sitzbelegungserkennung abgeschaltet werden.

## Patentansprüche

1. Verfahren zur Sitzbelegungserkennung in einem Kraftfahrzeug mittels mindestens eines sitzbelegungs-Sensors (11), eines Türzustands-Sensors (2) und eines Motorzustands-Sensors (3), wobei der Sitzbelegungs-Sensor (11) nur in vordefinierten Situationen für ein Zeitintervall ausgelöst wird, wobei die Sitzbelegungserkennung entweder bei geschlossenen Fahrzeugtüren durch Anlassen des Motors oder bei laufendem Motor durch Schließen einer Fahrzeugtür ausgelöst wird, **dadurch gekennzeichnet, dass** mittels eines weiteren Sensors (14) eine bevorstehende oder stattfindende Kollision mit einem Hindernis erfasst wird, wodurch eine Erfassung der Position des Fahrzeugsitzes und/oder der Sitzposition des Fahrzeuginsassen durch den Sitzbelegungs-Sensor (11) ausgelöst wird, wobei die Sitzbelegungserkennung In jeder der vordefinierten Situationen mit einem jeweils für die Situation vordefinierten Sensorprofil erfolgt.

2. Verfahren nach Anspruch 1, **dadurch gekennzeichnet, dass** der Sitzbelegungs-Sensor (11) eine Sitzheizung ansteuert.

3. Vorrichtung zur Sitzbelegungserkennung in einem Kraftfahrzeug, umfassend einen Sitzbelegungssensor (11), einem Türzustands-Sensor (2) und einen Motorzustands-Sensor (3), wobei der Sitzbelegungs-Sensor (11) durch den Türzustands-Sensor (2) und/oder den Motorzustands-Sensor (3) für ein Zeitintervall aktivierbar ist, **dadurch gekennzeichnet, dass** die Vorrichtung mit einem Sensor (14) zur Ermittlung einer Kollision mit einem Hindernis ausgebildet ist, wobei über den Sensor (14) der Sitzbelegungs-Sensor (11) zur Erfassung der Position des Fahrzeugsitzes und/oder Sitzposition des Fahrzeuginsassen aktivierbar ist, wobei die Sitzbelegungserkennung in jeder der vordefinierten Situationen mit einem jeweils für die Situation vordefinierten Sensorprofil erfolgt.

4. Vorrichtung nach Anspruch 3, **dadurch gekennzeichnet, dass** dem Sitzbelegungs- Sensor (11) ein Zähler zugeordnet ist, der durch den Türzustands-Sensor (2), dem Motorzustands-Sensor (3) oder den Sensor (14) aktivierbar ist.

5. Vorrichtung nach Anspruch 3 oder 4, **dadurch gekennzeichnet. dass** der Sitzbelegungs-Sensor (11) mit einer Sitzheizung (13) verbunden ist.

## Claims

1. Method for seat occupancy recognition in a vehicle by means of at least one seat occupancy sensor (11), a door state sensor (2) and an engine state sensor (3), the seat occupancy sensor (11) being triggered for a period of time only in predefined situations, the seat occupancy recognition being triggered either by starting up the engine with the vehicle doors closed or by closing a vehicle door with the engine running, **characterized in that** a further sensor (14) is used to detect an imminent collision, or a collision taking place, with an obstacle, as a result of which a detection of the position of the vehicle seat and/or of the seat position of the vehicle occupant is triggered by the seat occupancy sensor (11), the seat occupancy recognition in each of the predefined situations taking place with a sensor profile predefined in each case for the situation.

2. Method according to Claim 1, **characterized in that** the seat occupancy sensor (11) activates a seat heating system.

3. Apparatus for seat occupancy recognition in a vehicle, comprising a seat occupancy sensor (11), a door state sensor (2) and an engine state sensor (3), it being possible for the seat occupancy sensor (11) to be activated for a period of time by the door state sensor (2) and/or the engine state sensor (3), **characterized in that** the apparatus is designed with a sensor (14) for determining a collision with an obstacle, it being possible for the sensor (14) to be used to activate the seat occupancy sensor (11) for detecting the position of the vehicle seat and/or seat position of the vehicle occupant, the seat occupancy recognition in each of the predefined situations taking place with a sensor profile predefined in each case for the situation.

4. Apparatus according to Claim 3, **characterized in that** the seat occupancy sensor (11) is assigned a counter which can be activated by the door state sensor (2), the engine state sensor (3) or the sensor (14).

5. Apparatus according to Claim 3 or 4, **characterized in that** the seat occupancy sensor (11) is connected to a seat heating system (13).

## Revendications

1. Procédé de reconnaissance d'occupation d'un siège dans un véhicule automobile au moyen d'au moins un capteur d'occupation de siège (11), d'un capteur d'état de la porte (2) et d'un capteur d'état du moteur (3), le capteur d'occupation de siège (11) n'étant déclenché que dans des situations prédéfinies pendant un intervalle de temps, la reconnaissance d'occupation du siège étant déclenchée soit lorsque les portes du véhicule sont fermées au démarrage du moteur, soit lorsque le moteur tourne à la fermeture d'une porte du véhicule, **caractérisé en ce que** l'on détecte au moyen d'un autre capteur (14) une collision imminente ou se produisant avec un obstacle, sur quoi l'on déclenche la détection de la position du siège du véhicule et/ou la position du siège de l'occupant du véhicule par le capteur d'occupation de siège (11), la reconnaissance d'occupation du siège s'effectuant dans chacune des situations prédéfinies avec un profil de capteur prédéfini à chaque fois pour la situation particulière.

2. Procédé selon la revendication 1, **caractérisé en ce que** le capteur d'occupation de siège (11) commande un chauffage de siège.

3. Dispositif de reconnaissance d'occupation de siège dans un véhicule automobile, comprenant un capteur d'occupation de siège (11), un capteur d'état de la porte (2) et un capteur d'état du moteur (3), le capteur d'occupation de siège (11) pouvant être activé par le capteur d'état de la porte (2) et/ou le capteur d'état du moteur (3) pendant un intervalle de temps, **caractérisé en ce que** le dispositif est réalisé avec un capteur (14) pour déterminer une collision avec un obstacle, le capteur (14) activant le capteur d'occupation de siège (11) pour la détection de la position du siège du véhicule et/ou de la position du siège de l'occupant du véhicule, la reconnaissance d'occupation de siège s'effectuant dans chacune des situations prédéfinies avec un profil de capteur prédéfini à chaque fois pour la situation respective.

4. Dispositif selon la revendication 3, **caractérisé en ce que** l'on associe au capteur d'occupation de siège (11) un compteur qui peut être activé par le capteur d'état de la porte (2), le capteur d'état du moteur (3) ou le capteur (14).

5. Dispositif selon la revendication 3 ou 4, **caractérisé en ce que** le capteur d'occupation de siège (11) est connecté à un chauffage de siège (13).
